# EUROPÄISCHE PATENTSCHRIFT

(11) **EP 3 418 005 B1**
(45) Veröffentlichungstag und Bekanntmachung des Hinweises auf die Patenterteilung: **09.08.2023**
(21) Anmeldenummer: 18177326.8
(22) Anmeldetag: 12.06.2018
(51) Int. Cl.: B25J 9/00, H04W 4/70, H04W 4/80, G08C 17/02, A47L 9/28

(54) **SYSTEM AUS MINDESTENS EINEM HAUSHALTSGERÄT, MINDESTENS EINEM SICH SELBSTTÄTIG FORTBEWEGENDEN REINIGUNGSGERÄT UND EINER STEUEREINRICHTUNG**
SYSTEM COMPRISED OF AT LEAST ONE HOUSEHOLD APPLIANCE, AT LEAST ONE AUTOMATIC ADVANCING CLEANING APPARATUS AND A CONTROL DEVICE
SYSTÈME COMPORTANT AU MOINS UN APPAREIL ÉLECTROMÉNAGER, AU MOINS UN DISPOSITIF DE NETTOYAGE AUTOMATIQUE ET UN DISPOSITIF DE COMMANDE

(30) Priorität: 16.06.2017 DE 102017113279
(43) Veröffentlichungstag der Anmeldung: 26.12.2018
(73) Patentinhaber: Vorwerk & Co. Interholding GmbH, 42275 Wuppertal (DE)
(72) Erfinder: Erkek, David, 5000 Aarau (CH); Hackert, Georg, 44869 Bochum (DE); Isenberg, Gerhard, 50668 Köln (DE); Ortmann, Roman, 47057 Duisburg (DE); Schmidt, Andreas, 40822 Mettmann (DE)
(74) Vertreter: Müller, Enno

(56) Entgegenhaltungen:
- EP-A1- 2 996 007
- EP-A2- 2 839 769
- DE-A1-102008 044 122
- US-A1- 2014 041 145

## Beschreibung

### Gebiet der Technik

Die Erfindung betrifft ein System aus mindestens einem Haushaltsgerät, mindestens einem sich selbsttätig fortbewegenden Reinigungsgerät und einer Steuereinrichtung zur Steuerung eines Betriebs des Reinigungsgerätes, wobei das Haushaltsgerät und/ oder das Reinigungsgerät eingerichtet ist, seinen Gerätetyp, aktuellen Gerätestandort und/ oder aktuellen Betriebsstatus an die Steuereinrichtung zu übermitteln.

Des Weiteren betrifft die Erfindung ein Verfahren zum Betrieb eines Systems aus mindestens einem Haushaltsgerät, mindestens einem sich selbsttätig fortbewegenden Reinigungsgerät und einer Steuereinrichtung zur Steuerung eines Betriebs des Reinigungsgerätes, wobei das Haushaltsgerät und/ oder das Reinigungsgerät seinen Gerätetyp, aktuellen Gerätestandort und/ oder aktuellen Betriebsstatus an die Steuereinrichtung übermittelt.

### Stand der Technik

Haushaltsgeräte und Reinigungsgeräte sind im Stand der Technik in einer Vielzahl von Ausführungsformen bekannt.

Haushaltsgeräte können bspw. Küchenmaschinen, Waschmaschinen, Spülmaschinen, Backöfen, Kochplatten, Kaffeemaschinen oder auch Reinigungsgeräte wie Staubsauger oder Wischgeräte sein.

Sich selbsttätig fortbewegende Reinigungsgeräte sind im Stand der Technik bspw. als Saugroboter oder Wischroboter bekannt. Die sich selbsttätig fortbewegenden Reinigungsgeräte weisen eine Navigationseinrichtung auf, mittels welcher sich das Reinigungsgerät innerhalb einer Umgebung orientieren kann. Die Navigationseinrichtung beinhaltet üblicherweise eine Detektionseinrichtung, bspw. eine Bilderfassungseinrichtung wie eine Kamera oder eine Abstandsmesseinrichtung, welche Daten der Umgebung aufnimmt, die schließlich zu einer Umgebungskarte zusammengefasst werden. Anhand der Umgebungskarte kann sich das Reinigungsgerät kollisionsfrei durch die Umgebung navigieren und eine Eigenposition schätzen.

Des Weiteren ist es bekannt, Haushaltsgeräte bzw. Reinigungsgeräte mit einer internen oder externen Steuereinrichtung zu steuern. Im Sinne einer internen Steuereinrichtung ist die Steuereinrichtung eine lokale Steuereinrichtung, welche in das Haushaltsgerät bzw. das Reinigungsgerät integriert ist. Externe Steuereinrichtungen sind bspw. Fernbedienungen und/ oder mobile Kommunikationsgeräte eines Nutzers, mittels deren Hilfe das Haushaltsgerät bzw. das Reinigungsgerät über eine Kommunikationsverbindung ferngesteuert werden kann.

Des Weiteren ist es im Stand der Technik, bspw. aus der EP 1 967 116 B2, bekannt, ein Reinigungsgerät automatisch in Abhängigkeit von einer detektierten Verschmutzung zu steuern. Eine Sensoreinrichtung des Reinigungsgerätes erfasst einen Verschmutzungsgrad einer Bodenfläche, woraufhin bei Bedarf ein Betrieb des Reinigungsgerätes in Abhängigkeit von dem Verschmutzungsgrad gesteuert wird.

Die Druckschrift EP 2 996 007 A1 offenbart ein Verfahren zum Betrieb eines zumindest ein ortsfestes Haushaltsgerät und ein mobiles Haushaltsgerät umfassenden Systems, wobei die Haushaltsgeräte drahtlos miteinander kommunizieren und das zumindest eine ortsfeste Haushaltsgerät als Benutzerschnittstelle für das mobile Haushaltsgerät fungiert. Ein Betriebsstatus des mobilen Haushaltsgerätes, wie beispielsweise ein Akku-Ladezustand, ein Staubkammer-Füllgrad oder Ähnliches kann an das ortsfeste Haushaltsgerät übermittelt und von diesem auf einem Display angezeigt werden. Ein Nutzer kann an dem ortsfesten Haushaltsgerät darüber hinaus eine Bedienhandlung zur Steuerung des mobilen Haushaltsgerätes vornehmen.

### Zusammenfassung der Erfindung

Ausgehend von dem vorgenannten Stand der Technik ist es Aufgabe der Erfindung, ein Haushaltsgerät und ein sich selbsttätig fortbewegendes Reinigungsgerät in vorteilhafter Art und Weise, insbesondere vollautomatisch, zusammenarbeiten zu lassen.

Zur Lösung dieser Aufgabe wird zunächst ein System aus mindestens einem Haushaltsgerät, mindestens einem sich selbsttätig fortbewegenden Reinigungsgerät und einer Steuereinrichtung zur Steuerung eines Betriebs des Reinigungsgerätes vorgeschlagen, wobei die Steuereinrichtung eingerichtet ist, einen Reinigungsbetrieb des Reinigungsgerätes in Abhängigkeit von einem übermittelten Betriebsstatus des Haushaltsgerätes zu steuern.

Gemäß der Erfindung arbeiten das Haushaltsgerät und das Reinigungsgerät nun nicht mehr unabhängig voneinander, sondern sind in Bezug auf ihren Arbeitsbetrieb so miteinander verknüpft, dass der Betrieb des Reinigungsgerätes von einem aktuellen Betriebsstatus des Haushaltsgerätes abhängig ist. Der Betrieb des Reinigungsgerätes kann dabei von einer aktuellen Verwendung (aktiv) bzw. nicht-Verwendung (nicht aktiv), der Art des derzeitigen Betriebes oder einem anderen Betriebsstatus des Haushaltsgerätes abhängig sein. Insbesondere kann die Steuereinrichtung des Systems ausgebildet und eingerichtet sein, das Reinigungsgerät bei Beginn und/oder nach Beenden eines Betriebs des Haushaltsgerätes so zu steuern, dass das Reinigungsgerät einen Reinigungsbetrieb an dem Standort des Haushaltsgerätes durchführt.

Es wird vorgeschlagen, dass das Haushaltsgerät eine Küchenmaschine, ein Fensterreinigungsgerät, eine Waschmaschine oder ein Wäschetrockner ist. Während des Betriebs dieser Haushaltsgeräte kann es zu einer Verschmutzung der Umgebung kommen, insbesondere bei der Bestückung oder bei einer Entleerung des jeweiligen Haushaltsgerätes. Im Falle einer Küchenmaschine kann es bspw. vorkommen, dass Lebensmittel, welche in ein Gefäß eingefüllt werden, zu Boden fallen. Im Falle eines Fensterreinigungsgerätes und/ oder einer Waschmaschine kann es vorkommen, dass Flüssigkeit aus dem Haushaltsgerät tropft und auf eine Bodenfläche trifft. Im Falle eines Wäschetrockners ist es häufig so, dass nach einer abgeschlossenen Trocknung der in dem Wäschetrockner enthaltenen Wäsche, Flusen von einem Flusensieb herabfallen und auf den Fußboden treffen. Im Bereich all dieser Haushaltsgeräte ist es somit erforderlich, einen umgebenden Raumbereich, insbesondere eine benachbarte Fußbodenfläche, zu reinigen. Dies erfordert üblicherweise eine Saug- und/ oder Wischreinigung. Der Zeitpunkt, zu welchem die Verunreinigung auftritt, hängt dabei mit dem aktuellen Betriebsstatus des Haushaltsgerätes zusammen. Üblicherweise ist dieser Zeitpunkt entweder ein Zeitpunkt unmittelbar vor dem Arbeitsbetrieb des Haushaltsgerätes oder nach Beendigung des Arbeitsbetriebs. Im Falle einer Küchenmaschine ist eine Wahrscheinlichkeit für eine Verschmutzung zum Zeitpunkt des Betriebsstatus "Befüllen des Gefäßes" besonders hoch, während im Falle einer Waschmaschine oder eines Wäschetrockners eine Verunreinigung eher zum Zeitpunkt des Betriebsstatus "Entleeren des Haushaltsgerätes" besonders wahrscheinlich ist. Die Steuereinrichtung des Systems empfängt die Information über den Betriebsstatus des Haushaltsgerätes und steuert daraufhin das Reinigungsgerät derart, dass die typischerweise anfallende Verschmutzung beseitigt wird. Die Information über den aktuellen Betriebsstatus des Haushaltsgerätes kann die Steuereinrichtung durch eine Abfrage bei dem jeweiligen Haushaltsgerät erlangen oder durch Empfang eines von dem Haushaltsgerät übermittelten Statussignals. Neben den vorgenannten Haushaltsgeräten sind selbstverständlich auch andere Haushaltsgeräte innerhalb des Systems vernetzbar. Insbesondere empfiehlt sich eine Einbindung eines Haushaltsgerätes in das System dann, wenn dieses von einer Reinigung mittels des Reinigungsgerätes des Systems profitieren kann, nämlich dann, wenn üblicherweise eine Verschmutzung durch das Haushaltsgerät entsteht.

Es wird vorgeschlagen, dass die Steuereinrichtung eine integrierte Steuereinrichtung des Reinigungsgerätes oder eine externe Steuereinrichtung ist, wobei die Steuereinrichtung eine Kommunikationsverbindung zu dem Reinigungsgerät und dem Haushaltsgerät aufweist. Die Steuereinrichtung des Systems kann somit entweder eine in das Reinigungsgerät eingebaute Steuereinrichtung sein, oder alternativ eine separate Steuereinrichtung, welche außerhalb des Haushaltsgerätes und des Reinigungsgerätes angeordnet ist. Insbesondere ist es auch möglich, dass die Steuereinrichtung einem Webserver zugeordnet ist, insbesondere einer sogenannten Cloud.

Das Haushaltsgerät und das Reinigungsgerät sind vorteilhaft an der Steuereinrichtung registriert, wobei die Steuereinrichtung insbesondere eine Information über den jeweiligen Gerätetyp und einen Gerätestandort des Gerätes beinhaltet. Der Steuereinrichtung kann dabei vorteilhaft auch eine externe Eingabeeinrichtung zugeordnet sein, insbesondere ein mobiles Kommunikationsgerät eines Nutzers, über welches der Nutzer eine Eingabe, insbesondere eine Registrierung des jeweiligen Gerätes, vornehmen kann. Bei der Eingabeeinrichtung kann es sich insbesondere um ein Mobiltelefon, ein Laptop oder einen Tablet-Computer handeln. Sofern die Steuereinrichtung eine Komponente des Reinigungsgerätes ist, kann eine Registrierung eines anderen Reinigungsgerätes oder eines oder mehrerer Haushaltsgeräte des Systems vorteilhaft manuell über dessen Bedieneinrichtung erfolgen oder vorzugsweise per drahtloser Kommunikation mittels eines externen Endgerätes. Hierzu kann ebenfalls wieder ein Mobiltelefon des Nutzers oder dergleichen geeignet sein, wenn eine entsprechende Applikation auf dem Endgerät installiert ist.

Des Weiteren wird vorgeschlagen, dass das System ein Kommunikationsnetzwerk aufweist, in welchem das Haushaltsgerät und das Reinigungsgerät über die Steuereinrichtung in Kommunikationsverbindung miteinander stehen. Bei dem Kommunikationsnetzwerk kann es sich vorteilhaft um ein Funknetzwerk handeln. Die Kommunikation zwischen den Geräten des Systems und der Steuereinrichtung könnte bspw. über WLAN, Bluetooth oder Zigbee erfolgen. Des Weiteren ist auch eine drahtgebundene Kommunikation möglich, insbesondere über PowerLAN. Vorteilhaft ist das Kommunikationsnetzwerk ein Kommunikationsnetzwerk eines Hausautomationssystems, welches eine Vielzahl von Haushaltsgeräten und/ oder Reinigungsgeräten aufweist, die mit einer zentralen Steuereinrichtung verbunden sind. Die zentrale Steuereinrichtung ist dabei ausgebildet, Informationen von den Geräten zu empfangen und Informationen an die Geräte zu übermitteln, wobei ein Betriebsstatus eines Haushaltsgerätes kontinuierlich oder in bestimmten Abständen oder bei bestimmten Anlässen an die zentrale Steuereinrichtung übermittelt werden kann. Das Hausautomationssystem kann des Weiteren eine Vielzahl anderer Geräte beinhalten, bspw. Rollläden, eine Heizungsanlage, eine Lüftungsanlage, eine Beleuchtungseinrichtung, ein Video-Audio-System und dergleichen.

Die Steuereinrichtung und/ oder das Reinigungsgerät können des Weiteren eine Umgebungskarte aufweisen, welche die Umgebung des Reinigungsgerätes und/ oder die Umgebung des Systems beinhaltet. Die Umgebungskarte beinhaltet vorteilhaft Informationen über eine Position des Haushaltsgerätes und des Reinigungsgerätes sowie ggf. auch zusätzlich Informationen über bspw. einen Betriebsstatus des Haushaltsgerätes und/ oder des Reinigungsgerätes. Dadurch hat die Steuereinrichtung Kenntnis über die relevanten Informationen der in dem System vernetzten Haushaltsgeräte und/ oder Reinigungsgeräte, sodass bspw. aus einer Vielzahl von zur Verfügung stehenden Reinigungsgeräten ein solches ausgewählt werden kann, welches dem Haushaltsgerät, welches aktuell einen Reinigungsservice benötigt, am besten dienen kann. Es ist nicht zwingend erforderlich, dass die Informationen als solche in die Umgebungskarte hineingeschrieben sind. Vielmehr kann zu einem in der Umgebungskarte gespeicherten Reinigungsgerät und/ oder Haushaltsgerät eine separate Datei verknüpft sein, welche Informationen zu dem Gerät beinhaltet, hier bspw. einen Betriebsstatus des Haushaltsgerätes. Die Steuereinrichtung des Systems kann vor einer Berechnung einer Betriebsstrategie auf diese Datei zugreifen und entsprechende Informationen zu dem Haushaltsgerät und/ oder dem Reinigungsgerät abfragen. Eine Information zu einem Haushaltsgerät kann bspw. auch eine Position, eine Größe einer Standfläche und/ oder eine Aufstellhöhe des Haushaltsgerätes relativ zu einer Bodenfläche betreffen. Durch diese Informationen erhält die Steuereinrichtung des Systems einen Hinweis darauf, welcher Umgebungsbereich des Haushaltsgerätes verschmutzt sein kann, um einen Betrieb des Reinigungsgerätes entsprechend so zu steuern, dass die Verschmutzung vollständig beseitigt wird.

Der Betrieb des Reinigungsgerätes, welcher durch die Steuereinrichtung gesteuert wird, kann einer Vielzahl unterschiedlicher Aufgaben dienen, bspw. eine Saugreinigung und/ oder Wischreinigung beinhalten. Darüber hinaus ist bspw. auch eine Desinfektion, Geruchsneutralisierung, ein Polieren, Abschleifen, Wegpusten oder dergleichen möglich.

Neben dem zuvor beschriebenen System wird mit der Erfindung des Weiteren auch ein Verfahren zum Betrieb eines Systems aus mindestens einem Haushaltsgerät, mindestens einem sich selbsttätig fortbewegenden Reinigungsgerät und einer Steuereinrichtung zur Steuerung eines Betriebs des Reinigungsgerätes vorgeschlagen, wobei die Steuereinrichtung einen Reinigungsbetrieb des Reinigungsgerätes in Abhängigkeit von einem übermittelten Betriebsstatus des Haushaltsgerätes steuert. Wie zuvor in Bezug auf das erfindungsgemäße System erläutert, kann das Verfahren nunmehr dazu eingesetzt werden, im Falle eines definierten Betriebsstatus des Haushaltsgerätes, eine Reinigung im Bereich des Haushaltsgerätes durchzuführen, nämlich mittels eines Reinigungsgerätes, das über das System mit dem Haushaltsgerät verknüpft ist. Dazu wird ein aktueller Betriebsstatus des Haushaltsgerätes an die Steuereinrichtung übermittelt und ein entsprechender Steuerbefehl von der Steuereinrichtung generiert, welcher dem Betriebsstatus des Haushaltsgerätes entspricht. Insbesondere kann zeitlich zu Beginn, während oder nach der Benutzung des Haushaltsgerätes eine Reinigung an dem Standort des Haushaltsgerätes gesteuert werden.

Zum Vernetzen des Haushaltsgerätes und des Reinigungsgerätes bzw. mehrerer Haushaltsgeräte und/ oder mehrerer Reinigungsgeräte innerhalb des Systems ist es erforderlich, dass diese zunächst innerhalb des Systems registriert werden. Dazu wird vorgeschlagen, dass das Haushaltsgerät und/ oder das Reinigungsgerät seinen Gerätetyp, aktuellen Gerätestandort und/ oder aktuellen Betriebsstatus an die Steuereinrichtung übermittelt. Die Übermittlung dieser Informationen an die Steuereinrichtung kann bspw. durch eine manuelle Eingabe an einer Eingabeschnittstelle der Steuereinrichtung oder eines damit in Kommunikationsverbindung stehenden externen Gerätes erfolgen, oder automatisch dadurch, dass bspw. entsprechende Informationen des Reinigungsgerätes und/ oder des Haushaltsgerätes eingescannt werden. Hierzu kann das Haushaltsgerät und/ oder das Reinigungsgerät einen Informationen enthaltenden Code an die Steuereinrichtung übermitteln und/ oder bspw. an einer Gehäuseaußenseite einen Code, insbesondere einen Barcode oder QR-Code, tragen.

Des Weiteren wird vorgeschlagen, dass die Steuereinrichtung einen Steuerbefehl zum Fortbewegen des Reinigungsgerätes zu dem aktuellen Gerätestandort des Haushaltsgerätes und zum Durchführen eines Reinigungsbetriebs an dem Gerätestandort ausgibt, woraufhin das Reinigungsgerät zu dem Haushaltsgerät fährt und dort eine Reinigung durchführt. Bspw. kann ein Haushaltsgerät des Systems einen Betriebsstatus an die Steuereinrichtung übermitteln, welcher signalisiert, dass ein Arbeitsbetrieb erfolgreich abgeschlossen wurde. Die Steuereinrichtung prüft daraufhin, welche Serviceaufgabe bei Auftreten dieses Betriebsstatus benötigt wird und welches Reinigungsgerät des Systems dafür zur Verfügung steht. Dabei kann ein aktueller Standort der Reinigungsgeräte berücksichtigt werden. Die Steuereinrichtung übermittelt daraufhin einen Steuerbefehl an das ausgewählte Reinigungsgerät, sodass dieses an den Gerätestandort des Haushaltsgerätes verfährt und dort eine Reinigung durchführt. Sofern mehrere Reinigungsgeräte innerhalb des Systems verfügbar

(Weiter auf Seite 9 der ursprünglich eingereichten Unterlagen) sind, kann u.a. auch geprüft werden, welches Reinigungsgerät dem Gerätestandort des Haushaltsgerätes am nächsten liegt, welches Reinigungsgerät derzeit für einen Reinigungsbetrieb verfügbar ist und ob sich Personen in einem Verfahrweg zwischen dem aktuellen Standort des Reinigungsgerätes und dem Gerätestandort des Haushaltsgerätes aufhalten.

Eine Ausführungsform kann bspw. vorsehen, dass ein als multifunktionale Küchenmaschine ausgebildetes Haushaltsgerät mittels einer integrierten Zubereitungssteuerung eine automatische Zubereitung von Lebensmitteln durchführt. Dieses Haushaltsgerät signalisiert bspw. an die Steuereinrichtung, wann eine Zubereitung beginnt und/ oder beendet ist. Die Steuereinrichtung prüft daraufhin ggf., wann ein nächster Reinigungszyklus eines Reinigungsgerätes des Systems geplant ist und passt diesen ggf. derart an, dass baldmöglichst eine Reinigung an dem Gerätestandort des Haushaltsgerätes durchgeführt werden kann. Dabei kann berücksichtigt werden, dass keine Person in dem zu reinigenden Bereich anwesend ist, da diese die Reinigungsdurchführung stören könnte.

Gemäß einem weiteren Ausführungsbeispiel kann das Haushaltsgerät bspw. eine Mikrowelle, ein Herd, ein Backofen oder eine Spülmaschine sein. Im Falle einer Spülmaschine könnte bspw. mit dem Starten eines Reinigungsbetriebs der Spülmaschine ein Reinigungsbetrieb durch das Reinigungsgerät gestartet werden, um beim Bestücken der Spülmaschine auf eine Bodenfläche gelangte Verschmutzungen zu reinigen. Gemäß dieser Ausführungsform ergibt sich durch den Betriebsstart der Spülmaschine gleichzeitig die Information für die Steuereinrichtung, dass eine Bestückung abgeschlossen ist.

Gemäß einer weiteren Ausführungsform kann es bei einem Entleeren einer Spülmaschine, einer Waschmaschine oder einem Trockner zu einem Herunterfallen von Flüssigkeitstropfen und/ oder Flusen auf eine Bodenfläche kommen. Das Haushaltsgerät signalisiert der Steuereinrichtung daher bspw., dass ein Reinigungsbetrieb abgeschlossen ist und das Haushaltsgerät geöffnet wird. Diese Information wird von der Steuereinrichtung sodann zu einem Steuerbefehl für das Reinigungsgerät verarbeitet, um eine Reinigung mittels des Reinigungsgerätes zu veranlassen.

Eine weitere Ausführungsform kann vorsehen, dass das Haushaltsgerät ein Fensterreiniger ist, welcher eine Reinigung einer Fensterfläche mittels Flüssigkeit durchführt. Nach einer Beendigung eines Reinigungsbetriebs des Fensterreinigers kann eine Information über die abgeschlossene Reinigung an die Steuereinrichtung übermittelt werden. Mit dieser Information wird vorteilhaft auch der Einsatzort des Fensterreinigers mitgeteilt, sodass das Reinigungsgerät an denjenigen Gerätestandort des Haushaltsgerätes gesteuert werden kann, in welchem ggf. eine Verunreinigung stattgefunden hat.

Des Weiteren empfiehlt es sich, dass in Abhängigkeit von der Art des Haushaltsgerätes eine Reinigungsart des Reinigungsgerätes angepasst wird. Sofern es sich bei dem Haushaltsgerät bspw. um einen Fensterreiniger handelt, empfiehlt sich eine Feuchtreinigung mittels des Reinigungsgerätes. Im Gegensatz dazu kann es bei einem als multifunktionale Küchenmaschine ausgebildeten Haushaltsgerät vorteilhaft sein, eine Trockenreinigung durchzuführen. Alternativ kann die Art der Reinigung auch über den Inhalt bestimmter Rezeptschritte der Küchenmaschine gesteuert werden, insbesondere wenn Zutaten wie Mehl, Fett, Öl und dergleichen verwendet wurden.

Insbesondere wird vorgeschlagen, dass ein Steuerbefehl für das Reinigungsgerät zu Beginn und/ oder nach Beendigung eines Arbeitsbetriebs des Haushaltsgerätes ausgegeben wird. Wie zuvor erläutert kommt es insbesondere bei einem Bestücken oder einem Ausräumen eines Haushaltsgerätes zu einer Verunreinigung einer benachbarten Bodenfläche. Der Beginn bzw. die Beendigung des Arbeitsbetriebs des Haushaltsgerätes gibt somit den relevanten Zeitpunkt an, um zeitnah einen Betrieb des Reinigungsgerätes zu steuern.

Des Weiteren wird vorgeschlagen, dass die Steuereinrichtung vor Übermittlung eines Steuerbefehls an das Reinigungsgerät eine Bestätigungsanfrage an einen Nutzer des Systems übermittelt, wobei insbesondere eine Bestätigungsanfrage auf einem mobilen Endgerät des Nutzers dargestellt wird. Insbesondere kann der Nutzer bspw. von einer auf einem Mobiltelefon installierten Applikation eine Anfrage darüber erhalten, ob eine Reinigung mittels des Reinigungsgerätes durchgeführt werden soll, welches von mehreren Reinigungsgeräten verwendet werden soll, ob die Reinigung sofort oder zu einem späteren Zeitpunkt stattfinden soll, welches Reinigungsmittel, bspw. Reinigungsflüssigkeit, verwendet werden soll und dergleichen. Erst nach einer bestimmten Auswahl oder Bestätigung der jeweiligen Anfrage durch den Nutzer wird eine Reinigung des Reinigungsgerätes gesteuert. Das mobile Endgerät des Nutzers kann insbesondere ein Mobiltelefon, ein Laptop, ein Tablet-Computer oder dergleichen sein. Des Weiteren kann es gemäß einer besonders einfachen Ausführung auch vorgesehen sein, dass die Bestätigungsanfrage auf einem Display des Reinigungsgerätes selbst angezeigt wird, oder auch auf einem Display des Haushaltsgerätes. Sofern das Display als Touchscreen ausgebildet ist, kann der Nutzer die Bestätigungsanfrage direkt über das Display beantworten.

Schließlich wird vorgeschlagen, dass ein Betriebsplan des Reinigungsgerätes, in welchem zukünftige Arbeitsaufgaben gespeichert sind, in Abhängigkeit von einem Betriebsstatus des Haushaltsgerätes angepasst wird. Diese Verfahrensführung empfiehlt sich insbesondere dann, wenn das Reinigungsgerät nicht ausschließlich spontan von dem Nutzer verwendet wird, sondern durch einen vorgegebenen Betriebsplan gesteuert wird, welcher zukünftige Arbeitsaufgaben des Reinigungsgerätes enthält. Dieser Betriebsplan kann insbesondere nach Wochentagen und/ oder Uhrzeiten geplante Reinigungseinsätze beinhalten. Sofern ein Betriebsstatus des Haushaltsgerätes sodann einen Betrieb des Reinigungsgerätes erfordert, wird der gespeicherte Betriebsplan des Reinigungsgerätes geändert, nämlich vorzugsweise derart, dass ein Reinigungstermin zeitlich verlegt wird, ersetzt wird, ergänzt wird oder dergleichen. Dabei wird insbesondere berücksichtigt, dass keine Person in dem zu reinigenden Bereich anwesend ist, sodass weder die Person noch der Reinigungsbetrieb des Reinigungsgerätes gestört wird.

### Kurze Beschreibung der Zeichnungen

Im Folgenden wird die Erfindung anhand von Ausführungsbeispielen näher erläutert. Es zeigen:
- Fig. 1: Ein System aus mehreren Haushaltsgeräten und einem Reinigungsgerät mit einer zentralen Steuereinrichtung während eines ersten Zeitpunkts,
- Fig. 2: das System gemäß Figur 1 während eines zweiten Zeitpunkts,
- Fig. 3: ein System aus einem Haushaltsgerät und einem Reinigungsgerät mit einer lokalen Steuereinrichtung während eines ersten Zeitpunkts,
- Fig. 4: das System gemäß Figur 3 während eines zweiten Zeitpunkts,
- Fig. 5: das Reinigungsgerät in einer Detailansicht.

### Beschreibung der Ausführungsformen

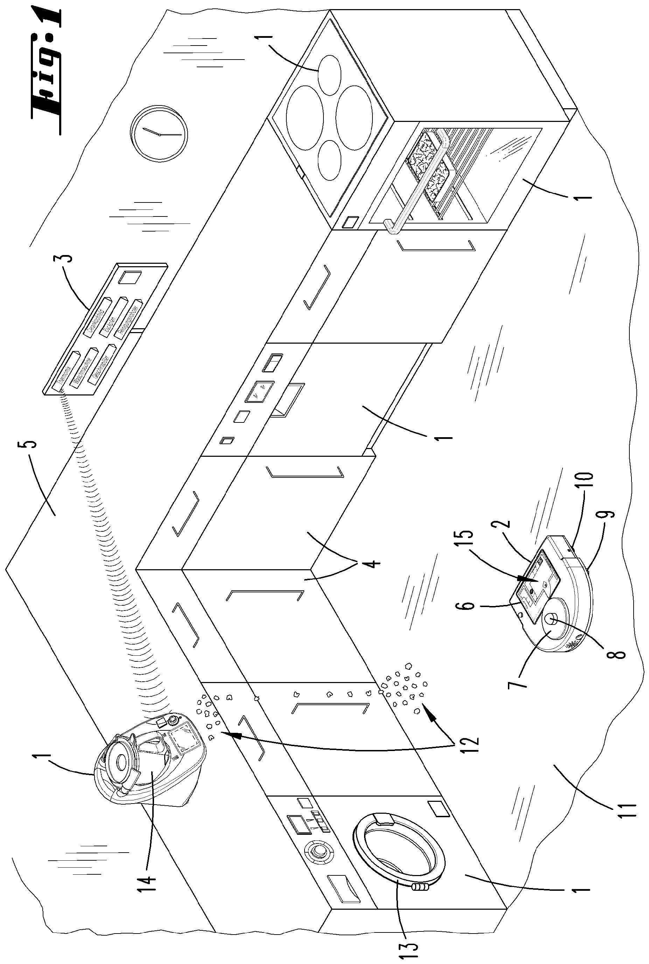

Figur 1 zeigt einen Raum einer Wohnung, nämlich hier eine Küche. In dem Raum sind mehrere Küchenschränke 4 und Haushaltsgeräte 1 vorhanden, wobei die Küchenschränke 4 des Weiteren eine aufliegende Arbeitsplatte 5 aufweisen. Die Haushaltsgeräte 1 umfassen hier Geräte wie bspw. eine Waschmaschine, eine Spülmaschine und eine Herd-Backofen-Kombination. Auf der Arbeitsplatte 5 steht des Weiteren eine elektromotorisch betriebene Küchenmaschine mit einem Zubereitungsgefäß 14.

Auf einem Boden 11 des Raumes steht ein autonomes Reinigungsgerät 2, welches sich selbsttätig innerhalb des Raumes bzw. ggf. auch benachbarter Räume fortbewegen kann. Das Reinigungsgerät 2 ist hier bspw. ein Saugroboter. Alternativ ist es jedoch auch möglich, das Reinigungsgerät 2 als Wischroboter auszubilden oder als eine Saug-Wisch-Kombination. Das Reinigungsgerät 2 verfügt über elektromotorisch angetriebene Räder 9 sowie ein ebenfalls elektromotorisch angetriebenes Reinigungselement 10, hier bspw. eine Borstenwalze zur Bearbeitung des Bodens 11. Das Reinigungsgerät 2 verfügt zudem über eine Navigations- und Selbstlokalisierungseinrichtung, mittels welcher sich das Reinigungsgerät 2 innerhalb des Raumes orientieren kann. Zu der Navigations- und Selbstlokalisierungseinrichtung gehören eine Abstandsmesseinrichtung 7 und eine Bilderfassungseinrichtung 8, mittels welcher das Reinigungsgerät 2 seine Umgebung erfasst. Aus den Daten kann eine Umgebungskarte 15 erstellt werden, die die Küchenschränke 4, die Haushaltsgeräte 1 und ggf. weitere Reinigungsgeräte 2 enthalten kann. Die erstellte Umgebungskarte 15 wird u.a. bspw. auf einem Display 6 des Reinigungsgerätes 2 dargestellt.

Das Reinigungsgerät 2 und die Haushaltsgeräte 1 bilden zusammen mit einer externen Steuereinrichtung 3 ein erfindungsgemäßes System. Die Steuereinrichtung 3 ist hier rein exemplarisch als eine Schalttafel dargestellt, welche Anzeigeelemente für eine momentane Aktivität der Haushaltsgeräte 1 und/oder des Reinigungsgerätes 2 aufweist. Die Steuereinrichtung 3, die Haushaltsgeräte 1 und das Reinigungsgerät 2 verfügen über nicht näher dargestellte Kommunikationsmodule, hier bspw. WLAN-Module, mit deren Hilfe diese untereinander und mit der zentralen Steuereinrichtung 3 kommunizieren können. Die zentrale Steuereinrichtung 3 dient bspw. als Accesspoint des WLAN-Netzwerkes, mit welchem sowohl die Haushaltsgeräte 1 als auch das Reinigungsgerät 2 kommunizieren. Eine Kommunikation zwischen bspw. einem Haushaltsgerät 1 und dem Reinigungsgerät 2 bzw. zwei Haushaltsgeräten 1 untereinander findet gemäß dieser Ausführungsform nicht direkt, sondern nur über die Steuereinrichtung 3 statt.

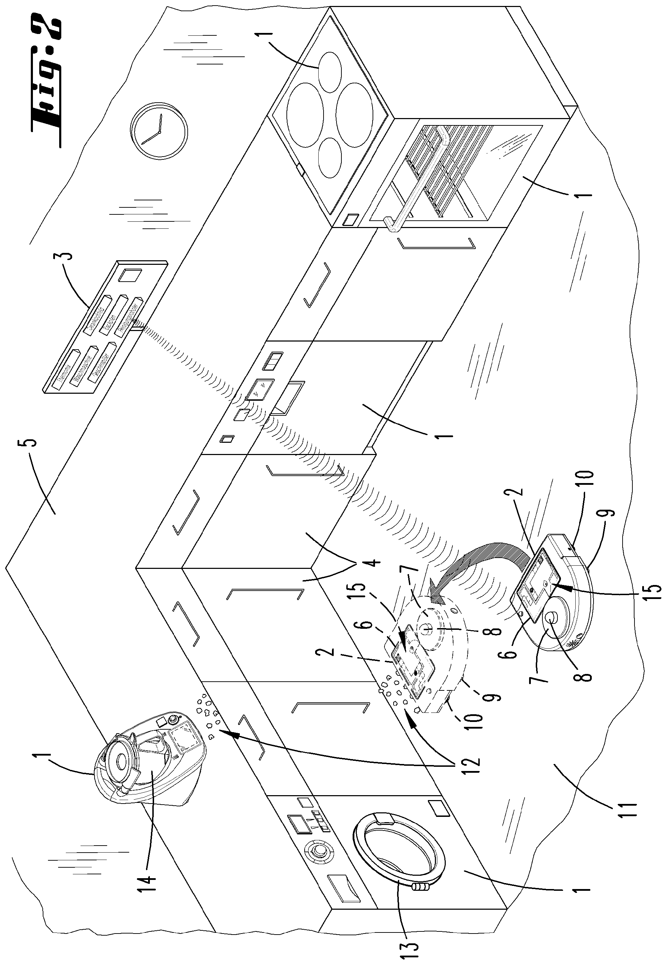

Die Haushaltsgeräte 1 und das Reinigungsgerät 2 können nun im Sinne der Erfindung so zusammenarbeiten, dass sich ein vollautomatischer Betrieb des Systems ohne ein Zutun eines Nutzers ergibt. Hierzu wird im Folgenden eine erste Ausführung anhand der Figuren 1 und 2 beschrieben.

In Figur 1 befindet sich das als Küchenmaschine ausgebildete Haushaltsgerät 1 in einem Betriebsmodus. Dabei werden in dem Zubereitungsgefäß 14 befindliche Lebensmittel zubereitet, bspw. zerkleinert, gerührt, erwärmt oder dergleichen. Vor der Zubereitung hat ein Nutzer die Zutaten in das Zubereitungsgefäß 14 einzubringen, wobei ggf. Zutaten neben das Haushaltsgerät 1 auf die Arbeitsplatte 5 und weiter auf den Boden 11 des dargestellten Raumes fallen. Hier sind auf dem Boden 11 Anteile einer Zutat dargestellt, welche im Folgenden als Schmutz 12 bezeichnet werden. Wenn der Zubereitungsbetrieb des Haushaltsgerätes 1 beendet ist, entnimmt der Nutzer die Lebensmittel aus dem Zubereitungsgefäß 14, wobei wiederum Schmutz 12 auf den Boden 11 gelangen kann. Um nun eine vollautomatische Beseitigung des Schmutzes 12, d.h. ohne Zutun des Nutzers, zu erreichen, sendet das Haushaltsgerät 1 mittels seines Kommunikationsmoduls eine Information über seinen aktuellen Betriebszustand an die zentrale Steuereinrichtung 3. Die Information kann hier bspw. die Information enthalten, dass die Zubereitung des Lebensmittels vollständig abgeschlossen ist. Der Betriebsstatus des Haushaltsgerätes 1 kann dabei bspw. als "Zubereitung abgeschlossen" bezeichnet werden.

Die Steuereinrichtung 3 empfängt die Information des Haushaltsgerätes 1 und verarbeitet diese zu einem Steuerbefehl für das Reinigungsgerät 2. Der Steuerbefehl enthält eine Anweisung zum Fortbewegen des Reinigungsgerätes 2 zu demjenigen Teilbereich des Bodens 11, auf welchem möglicherweise Schmutz vorhanden ist. Dazu enthält der Steuerbefehl eine Information über den Standort des Haushaltsgerätes 1. Die Steuereinrichtung 3 greift auf eine Umgebungskarte 15 des Raumes zu und kann anhand einer übermittelten Geräteidentifikation des Haushaltsgerätes 1 den zugehörigen Standort ermitteln. Nach Erhalt des Steuerbefehls bewegt sich das Reinigungsgerät 2 auf den Schmutz 12 zu und führt eine Saugreinigung durch, unter Zuhilfenahme des Reinigungselementes 12 und einer nicht der näher dargestellten Motor-GebläseEinrichtung. Figur 2 zeigt angedeutet durch einen Pfeil sowie die gestrichelt dargestellte Zielposition die Reaktion des Reinigungsgerätes 2 auf den von der Steuereinrichtung 3 übermittelten Steuerbefehl.

Damit die Haushaltsgeräte 1 und das Reinigungsgerät 2 bzw. auch mehrere Reinigungsgeräte 2 vorteilhaft innerhalb des Systems zusammenwirken können, sind diese zuvor an der zentralen Steuereinrichtung 3 zu registrieren. Bei der Registrierung hat jedes der Haushaltsgeräte 1 bzw. der Reinigungsgeräte 2 seine Geräteidentifikation, seinen aktuellen oder permanenten Gerätestandort (sofern es sich um ein stationäres Gerät wie eine Küchenmaschine handelt) sowie ggf. einen aktuellen Betriebsstatus an die Steuereinrichtung 3 zu übermitteln. Die Steuereinrichtung 3 verarbeitet diese Informationen in einer Datenbank, innerhalb welcher die Informationen der Haushaltsgeräte 1 und der Reinigungsgeräte 2 gespeichert sind. Die jedem Haushaltsgerät 1 bzw. Reinigungsgerät 2 zugeordnete Geräte-ID, wird bei der Übermittlung von Informationen an die Steuereinrichtung 3 mitgesendet. Die Steuereinrichtung 3 verfügt des Weiteren über Routinen, welche in Abhängigkeit von einem Betriebsstatus eines der Haushaltsgeräte 1 gesteuert werden. Im Falle der in den Figuren 1 und 2 gezeigten Küchenmaschine wird bei Empfang des Betriebsstatus "Zubereitung abgeschlossen" ein Steuerbefehl für eine Reinigung im Bereich der Küchenmaschine generiert und an das Reinigungsgerät 2 übermittelt. Sofern das System mehrere Reinigungsgeräte 2 aufweist, kann die Steuereinrichtung 3 zudem prüfen, welches Reinigungsgerät 2 verfügbar ist und/oder dem zu reinigenden Bereich des Bodens 11, in welchem Schmutz 12 zu vermuten ist, am nächsten liegt. Alternativ könnte die Steuereinrichtung 3 einen Steuerbefehl an alle Reinigungsgeräte 2 übermitteln, woraufhin die Reinigungsgeräte 2 jeweils anhand ihrer Umgebungskarte 15 prüfen, welches Reinigungsgerät 2 dem Ort des Schmutzes 12 am nächsten ist und daraufhin nur dasjenige Reinigungsgerät 2 dorthin fährt, welches den kürzesten Weg hat. Die anderen Reinigungsgeräte 2 verbleiben an ihrem bisherigen Gerätestandort.

Zusätzlich kann es vorgesehen sein, dass nach Empfang eines Steuerbefehls der Steuereinrichtung 3 an einem Reinigungsgerät 2 zunächst eine Bestätigungsanfrage an einen Nutzer des Systems übermittelt wird. Diese Bestätigungsanfrage kann bspw. auf dem Display 6 des Reinigungsgerätes 2 angezeigt werden. Der Nutzer hat diese Bestätigungsanfrage zu beantworten, damit der Steuerbefehl seine Wirkung entfaltet, d.h. das Reinigungsgerät 2 gemäß dem Inhalt des Steuerbefehls gesteuert wird. In dem Fall, dass das Display 6 bspw. ein Touchscreen ist, kann der Nutzer die Bestätigungsanfrage durch eine Berührung des Displays 6 bestätigen. Alternativ kann es auch vorgesehen sein, dass ein externes Endgerät mit dem Reinigungsgerät 2 in Kommunikationsverbindung steht, bspw. ein Mobiltelefon des Nutzers. Auf diesem kann die Bestätigungsanfrage ebenso dargestellt und bestätigt werden.

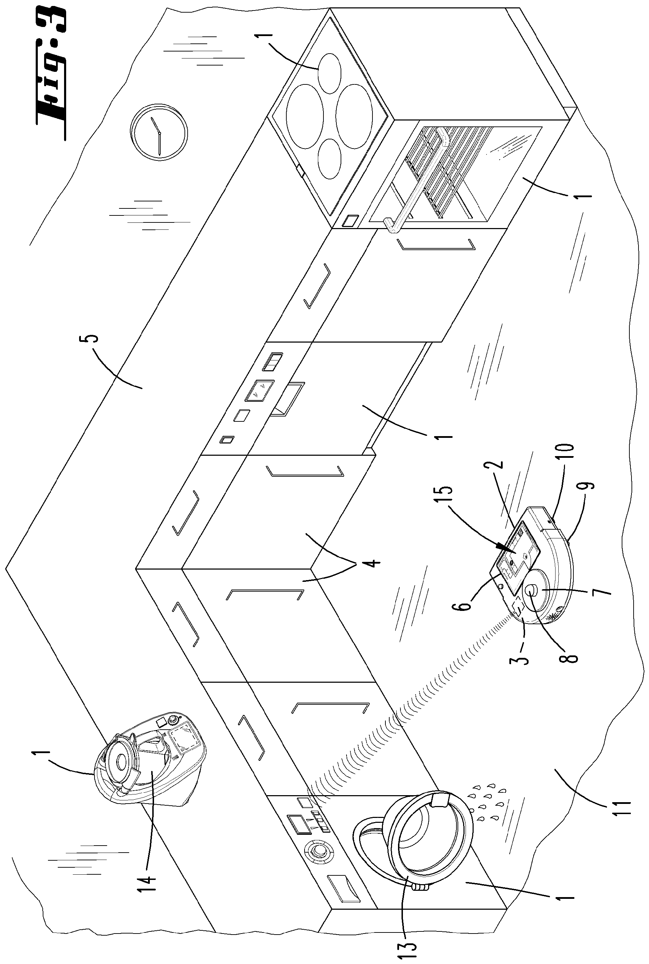

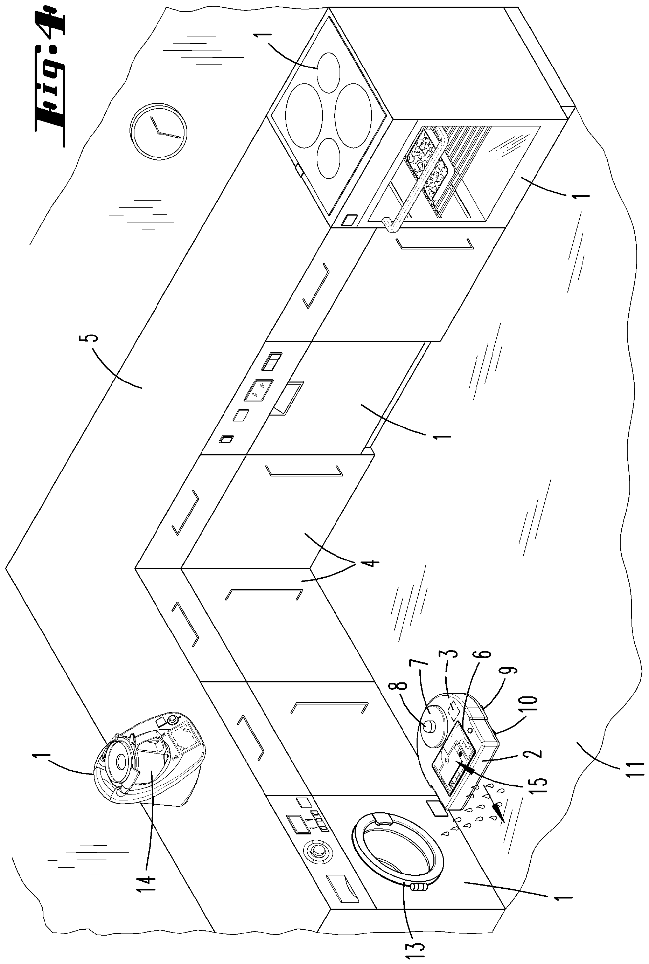

Die Figuren 3 und 4 zeigen eine zweite Ausführungsform der Erfindung, bei welcher das System keine externe Steuereinrichtung 3 aufweist, sondern eine lokale Steuereinrichtung 3 des Reinigungsgerätes 2 gleichzeitig eine zentrale Steuereinrichtung 3 des Systems bildet. Das System weist eine Mehrzahl von Haushaltsgeräten 1 sowie das Reinigungsgerät 2 auf. In der dargestellten Situation gemäß Figur 3 hat das als Waschmaschine ausgebildete Haushaltsgerät 1 gerade einen Waschvorgang beendet. Der Nutzer hat eine Gerätetür 13 des Haushaltsgerätes 1 zur Entnahme von Wäsche geöffnet, wobei Flüssigkeitstropfen von der Wäsche auf den Boden 11 herabgetropft sind. Ohne ein weiteres Zutun des Nutzers ist das System nun eingerichtet, die auf dem Boden 11 befindlichen Flüssigkeitstropfen zu beseitigen. Dazu übermittelt das Haushaltsgerät 1 seinen Betriebsstatus "Waschvorgang beendet" und/oder "Tür geöffnet" an die Steuereinrichtung 3 des Reinigungsgerätes 2, welche als zentrale Steuereinrichtung 3 des Systems fungiert. Mit dem Betriebsstatus wird auch die Geräteidentifikation des Haushaltsgerätes 1 an die Steuereinrichtung 3 übermittelt. Die Steuereinrichtung 3 empfängt die Information und prüft anhand der Umgebungskarte 15 des Reinigungsgerätes 2, an welchem Gerätestandort sich das Haushaltsgerät 1 befindet. Daraufhin generiert die Steuereinrichtung 3 einen Steuerbefehl für das Reinigungsgerät 2, welcher die Anweisung enthält, sich zu dem die Flüssigkeitstropfen aufweisenden Bereich des Bodens 11 zu bewegen und dort die Flüssigkeitstropfen mittels des Reinigungselementes 10 aufzuwischen. Das Reinigungselement 10 des Reinigungsgerätes 2 ist hier vorteilhaft eine mit einem Reinigungstextil bespannte Reinigungswalze. Der Reinigungsvorgang ist in Figur 4 dargestellt. Dabei wischt das Reinigungsgerät 2 den Bereich des Bodens 11 unterhalb der Gerätetür 13 des Haushaltsgerätes 1.

Sofern das System neben dem dargestellten Reinigungsgerät 2 des Weiteren auch andere Reinigungsgeräte 2 aufweist, kann das eine Reinigungsgerät 2 dennoch die zentrale Steuereinrichtung 3 aufweisen und ggf. einen generierten Steuerbefehl an ein anderes Reinigungsgerät 2 übermitteln.

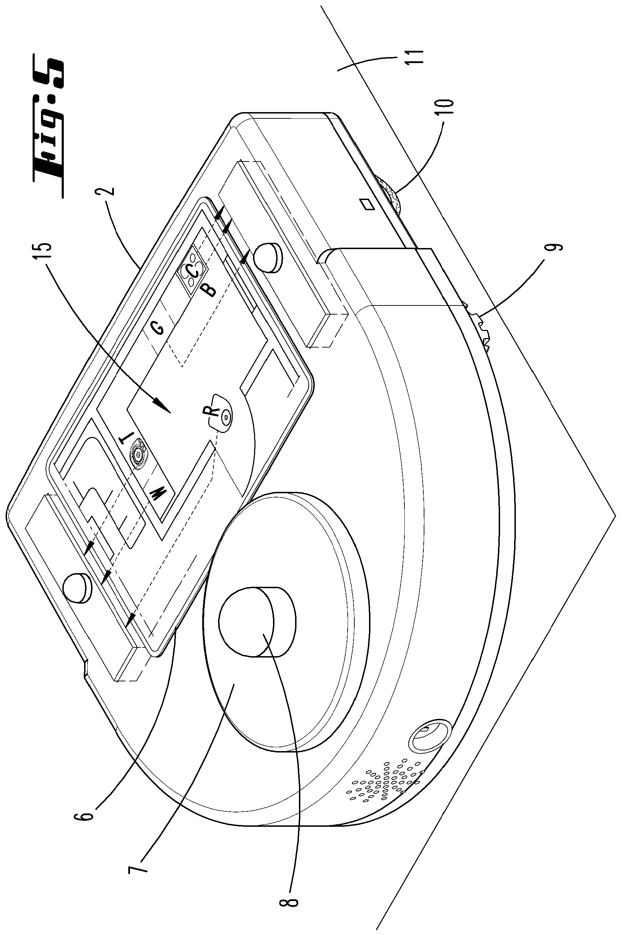

Figur 5 zeigt schließlich eine vergrößerte Darstellung eines beispielhaften Reinigungsgerätes 2. Auf dem Display 6 ist eine Umgebungskarte 15 des Reinigungsgerätes 2 dargestellt, welche einen Grundriss des Raumes enthält, in welchem sich das Reinigungsgerät 2 derzeit befindet. Des Weiteren sind in der Umgebungskarte 15 die Küchenschränke 4, Haushaltsgeräte 1 und ggf. weitere Reinigungsgeräte 2 verzeichnet. Eine momentane Aktivität eines der Haushaltsgeräte 1 oder eines Reinigungsgerätes 2 kann innerhalb der Umgebungskarte 15 bspw. durch ein Aufleuchten, eine besondere Farbigkeit oder dergleichen dargestellt werden. Somit ist für einen Nutzer des Reinigungsgerätes 2 erkennbar, welches Haushaltsgerät 1 derzeit einen aktiven Betriebsstatus aufweist und ggf. in Kürze das Reinigungsgerät 2 herbeirufen wird. Mit der Umgebungskarte 15 kann des Weiteren eine zusätzliche Datei verknüpft sein, in welcher ein Betriebsplan des Reinigungsgerätes 2 gespeichert ist. Dieser Betriebsplan enthält Arbeitsaufgaben des Reinigungsgerätes 2, vorteilhaft in einer kalenderartigen Tabelle mit Wochentagen und Uhrzeiten. Sofern das Reinigungsgerät 2 nun einen Steuerbefehl für eine Fortbewegung in einen bestimmten Bereich des Raumes erhält, kann das Reinigungsgerät 2 zunächst anhand seines Betriebsplans prüfen, ob momentan oder in Kürze eine andere Reinigungsaufgabe ansteht. Ggf. hat dann eine Abwägung dahingehend zu erfolgen, ob der Steuerbefehl beibehalten oder abgeändert wird, ggf. in Abhängigkeit davon, ob weitere Reinigungsgeräte 2 innerhalb des Systems zur Verfügung stehen, welche alternativ dem Steuerbefehl folgen könnten.

### Liste der Bezugszeichen

- 1: Haushaltsgerät
- 2: Reinigungsgerät
- 3: Steuereinrichtung
- 4: Küchenschrank
- 5: Arbeitsplatte
- 6: Display
- 7: Abstandsmesseinrichtung
- 8: Bilderfassungseinrichtung
- 9: Rad
- 10: Reinigungselement
- 11: Boden
- 12: Schmutz
- 13: Gerätetür
- 14: Zubereitungsgefäß
- 15: Umgebungskarte

## Patentansprüche

1. System aus mindestens einem Haushaltsgerät (1), mindestens einem sich selbsttätig fortbewegenden Reinigungsgerät (2) und einer Steuereinrichtung (3) zur Steuerung eines Betriebs des Reinigungsgerätes (2), wobei das Haushaltsgerät (1) und/oder das Reinigungsgerät (2) eingerichtet ist, seinen Gerätetyp, aktuellen Gerätestandort und/ oder aktuellen Betriebsstatus an die Steuereinrichtung (3) zu übermitteln, **dadurch gekennzeichnet, dass** die Steuereinrichtung (3) ausgebildet und eingerichtet ist, das Reinigungsgerät (2) bei Beginn und/ oder nach Beenden eines Betriebs des Haushaltsgerätes (1) so zu steuern, dass das Reinigungsgerät (2) einen Reinigungsbetrieb an dem Standort des Haushaltsgerätes (1) durchführt, wobei die Steuereinrichtung (3) des Weiteren ausgebildet und eingerichtet ist, einen Steuerbefehl zum Fortbewegen des Reinigungsgerätes (2) zu dem Gerätestandort des Haushaltsgerätes (1) und zum Durchführen eines Reinigungsbetriebs an dem Gerätestandort auszugeben, und wobei das Reinigungsgerät (2) ausgebildet ist, daraufhin zu dem Haushaltsgerät (1) zu fahren und dort eine Reinigung durchzuführen.

2. System nach Anspruch 1, **dadurch gekennzeichnet, dass** das Haushaltsgerät (1) eine Küchenmaschine, ein Fensterreinigungsgerät, eine Waschmaschine oder ein Wäschetrockner ist.

3. System nach Anspruch 1 oder 2, **dadurch gekennzeichnet, dass** die Steuereinrichtung (3) eine integrierte Steuereinrichtung (3) des Reinigungsgerätes (2) oder eine externe Steuereinrichtung (3) ist, wobei die Steuereinrichtung (3) eine Kommunikationsverbindung zu dem Reinigungsgerät (2) und dem Haushaltsgerät (1) aufweist.

4. System nach einem der vorhergehenden Ansprüche, **dadurch gekennzeichnet, dass** das System ein Kommunikationsnetzwerk, insbesondere ein Funknetzwerk, aufweist, in welchem das Haushaltsgerät (1) und das Reinigungsgerät (2) über die Steuereinrichtung (3) in Kommunikationsverbindung miteinander stehen.

5. Verfahren zum Betrieb eines Systems aus mindestens einem Haushaltsgerät (1), mindestens einem sich selbsttätig fortbewegenden Reinigungsgerät (2) und einer Steuereinrichtung (3) zur Steuerung eines Betriebs des Reinigungsgerätes (2), wobei das Haushaltsgerät (1) und/ oder das Reinigungsgerät (2) seinen Gerätetyp, aktuellen Gerätestandort und/oder aktuellen Betriebsstatus an die Steuereinrichtung (3) übermittelt, **dadurch gekennzeichnet, dass** die Steuereinrichtung (3) das Reinigungsgerät (2) bei Beginn und/oder nach Beenden eines Betriebs des Haushaltsgerätes (1) so steuert, dass das Reinigungsgerät (2) einen Reinigungsbetrieb an dem Standort des Haushaltsgerätes (1) durchführt, wobei die Steuereinrichtung (3) einen Steuerbefehl zum Fortbewegen des Reinigungsgerätes (2) zu dem Gerätestandort des Haushaltsgerätes (1) und zum Durchführen eines Reinigungsbetriebs an dem Gerätestandort ausgibt, woraufhin das Reinigungsgerät (2) zu dem Haushaltsgerät (1) fährt und dort eine Reinigung durchführt.

6. Verfahren nach Anspruch 5, **dadurch gekennzeichnet, dass** ein Steuerbefehl für das Reinigungsgerät (2) zu Beginn und/ oder nach Beendigung eines Arbeitsbetriebs des Haushaltsgerätes (1) ausgegeben wird.

7. Verfahren nach Anspruch 5 oder 6, **dadurch gekennzeichnet, dass** die Steuereinrichtung (3) vor Übermittlung eines Steuerbefehls an das Reinigungsgerät (2) eine Bestätigungsanfrage an einen Nutzer des Systems übermittelt, wobei insbesondere eine Bestätigungsanfrage auf einem mobilen Endgerät des Nutzers dargestellt wird.

8. Verfahren nach einem der Ansprüche 5 bis 7, **dadurch gekennzeichnet, dass** ein Betriebsplan des Reinigungsgerätes (2), in welchem zukünftige Arbeitsaufgaben gespeichert sind, in Abhängigkeit von einem Betriebsstatus des Haushaltsgerätes (1) angepasst wird.

## Claims

1. System consisting of at least one household appliance (1), at least one automatically moving cleaning device (2) and a control device (3) for controlling an operation of the cleaning device (2), wherein the household appliance (1) and/or the cleaning device (2) is set up to transmit its appliance type, current appliance location and/or current operating status to the control device (3), **characterized in that** the control device (3) is designed and set up to control the cleaning device (2) at the start and/or after termination of an operation of the household appliance (1) in such a manner that the cleaning device (2) performs a cleaning operation at the location of the household appliance (1), wherein the control device (3) is further designed and set up to output a control command for moving the cleaning device (2) to the appliance location of the household appliance (1) and for performing a cleaning operation at the appliance location, and wherein the cleaning device (2) is designed to thereupon move to the household appliance (1) and perform cleaning there.

2. The system according to claim 1, **characterized in that** the household appliance (1) is a kitchen machine, a window cleaning device, a washing machine or a clothes dryer.

3. The system according to claim 1 or 2, **characterized in that** the control device (3) is an integrated control device (3) of the cleaning device (2) or an external control device (3), wherein the control device (3) has a communication connection to the cleaning device (2) and to the household appliance (1).

4. The system according to one of the preceding claims, **characterized in that** the system has a communication network, in particular a radio network, in which the household appliance (1) and the cleaning device (2) are in communication connection with one another via the control device (3).

5. A method for operating a system consisting of at least one household appliance (1), at least one automatically moving cleaning device (2) and a control device (3) for controlling an operation of the cleaning device (2), the household appliance (1) and/or the cleaning device (2) transmitting its appliance type, current appliance location and/or current operating status to the control device (3), **characterized in that** the control device (3) controls the cleaning device (2) at the start and/or after termination of an operation of the household appliance (1) in such a manner that the cleaning device (2) performs a cleaning operation at the location of the household appliance (1), wherein the control device (3) outputs a control command for moving the cleaning appliance (2) to the device location of the household appliance (1) and for performing a cleaning operation at the appliance location, whereupon the cleaning device (2) moves to the household appliance (1) and performs cleaning there.

6. The method according to claim 5, **characterized in that** a control command for the cleaning device (2) is output at the start and/or after termination of an operation of the household appliance (1).

7. The method according to one of claims 5 or 6, **characterized in that** the control device (3) transmits a confirmation inquiry to a user of the system prior to transmitting a control command to the cleaning device (2), wherein in particular a confirmation inquiry is displayed on a mobile end device of the user.

8. The method according to one of claims 5 to 7, **characterized in that** an operating plan of the cleaning device (2), in which future operating tasks are stored, is adapted as a function of an operating status of the household appliance (1).

## Revendications

1. Système composé d'au moins un appareil ménager (1), d'au moins un appareil de nettoyage (2) se déplaçant automatiquement et d'un dispositif de commande (3) pour commander un fonctionnement de l'appareil de nettoyage (2), l'appareil ménager (1) et/ou l'appareil de nettoyage (2) étant conçu pour transmettre au dispositif de commande (3) son type d'appareil, l'emplacement actuel de l'appareil et/ou l'état de fonctionnement actuel, **caractérisé en ce que** le dispositif de commande (3) est conçu et agencé pour commander l'appareil de nettoyage (2) au début et/ou à la fin d'un fonctionnement de l'appareil ménager (1), de telle sorte que l'appareil de nettoyage (2) effectue une opération de nettoyage à l'emplacement de l'appareil ménager (1), le dispositif de commande (3) étant en outre conçu et agencé pour émettre un ordre de commande pour déplacer l'appareil de nettoyage (2) vers l'emplacement de l'appareil ménager (1) et pour effectuer une opération de nettoyage à l'emplacement de l'appareil, et l'appareil de nettoyage (2) étant conçu pour se déplacer ensuite vers l'appareil ménager (1) et y effectuer un nettoyage.

2. Système selon la revendication 1, **caractérisé en ce que** l'appareil ménager (1) est un robot ménager, un appareil de nettoyage de vitres, une machine à laver ou un sèche-linge.

3. Système selon la revendication 1 ou 2, **caractérisé en ce que** le dispositif de commande (3) est un dispositif de commande intégré (3) de l'appareil de nettoyage (2) ou un dispositif de commande externe (3), le dispositif de commande (3) présentant une liaison de communication avec l'appareil de nettoyage (2) et l'appareil ménager (1).

4. Système selon l'une des revendications précédentes, **caractérisé en ce que** le système comporte un réseau de communication, notamment un réseau radio, dans lequel l'appareil ménager (1) et l'appareil de nettoyage (2) sont en liaison de communication entre eux par l'intermédiaire du dispositif de commande (3).

5. Procédé pour faire fonctionner un système composé d'au moins un appareil ménager (1), d'au moins un appareil de nettoyage (2) se déplaçant automatiquement et d'un dispositif de commande (3) pour commander un fonctionnement de l'appareil de nettoyage (2), l'appareil ménager (1) et/ou l'appareil de nettoyage (2) transmettant au dispositif de commande (3) son type d'appareil, l'emplacement actuel de l'appareil et/ou l'état de fonctionnement actuel, **caractérisé en ce que** le dispositif de commande (3) commande l'appareil de nettoyage (2) au début et/ou à la fin d'un fonctionnement de l'appareil ménager (1) de telle sorte que l'appareil de nettoyage (2) effectue une opération de nettoyage à l'emplacement de l'appareil ménager (1), le dispositif de commande (3) émettant un ordre de commande pour déplacer l'appareil de nettoyage (2) vers l'emplacement de l'appareil ménager (1) et pour effectuer une opération de nettoyage à l'emplacement de l'appareil, suite à quoi l'appareil de nettoyage (2) se déplace vers l'appareil ménager (1) et y effectue un nettoyage.

6. Procédé selon la revendication 5, **caractérisé en ce qu'**un ordre de commande pour l'appareil de nettoyage (2) est émis au début et/ou à la fin d'un mode de fonctionnement de l'appareil ménager (1).

7. Procédé selon la revendication 5 ou 6, **caractérisé en ce que** le dispositif de commande (3) transmet une demande de confirmation à un utilisateur du système avant de transmettre une instruction de commande à l'appareil de nettoyage (2), une demande de confirmation étant notamment affichée sur un terminal mobile de l'utilisateur.

8. Procédé selon l'une des revendications 5 à 7, **caractérisé en ce qu'**un plan de fonctionnement de l'appareil de nettoyage (2), dans lequel des tâches de travail futures sont enregistrées, est adapté en fonction d'un état de fonctionnement de l'appareil ménager (1).
